# EUROPEAN PATENT APPLICATION

(11) **EP 3 933 708 A2**
(43) Date of publication of application: **05.01.2022**
(21) Application number: 21194741.1
(22) Date of filing: 03.09.2021
(51) Int. Cl.: G06N 3/04, G06N 3/08

(54) **MODEL TRAINING METHOD, IDENTIFICATION METHOD, DEVICE, STORAGE MEDIUM AND PROGRAM PRODUCT**

(30) Priority: 19.03.2021 CN 202110297030
(71) Applicant: BEIJING BAIDU NETCOM SCIENCE TECHNOLOGY CO., LTD., No.10 Shangdi 10th Street Haidian District Beijing 100085 (CN)
(72) Inventor: LIN, Tianwei, Beijing (CN); HE, Dongliang, Beijing (CN); LI, Fu, Beijing (CN)
(74) Representative: J A Kemp LLP

(57) **Abstract**

The present disclosure provides a model training method, an identification method, device, storage medium and program product, relating to computer vision technology and deep learning technology. In the solution provided by the present application, the image is deformed by the means of deforming the first training image without label itself, and the first unsupervised identification result is obtained by using the first model to identify the image before deformation, and the second unsupervised identification result is obtained by using the second model to identify the image after deformation, and the first unsupervised identification result of the first model is deformed, thus a consistency loss function can be constructed according to the second unsupervised identification result and the scrambled identification result. In this way, it is able to enhance the constraint effect of the consistency loss function and avoid destroying the scene semantic information of the images used for training.

## Description

### TECHNICAL FIELD

The present application relates to the field of artificial intelligence, specifically to computer vision technology and deep learning technology, and in particular to a model training method, an identification method, device, storage medium and program product.

### BACKGROUND

The purpose of semantic segmentation is to segment objects in an image according to their shape and classify them. Semantic segmentation algorithms can be widely used in various application scenarios of image understanding.

In the prior art, there is a semi-supervised training method for training the semantic segmentation model. The semi-supervised training method is a way to train the model using data with label and data without label. In order to improve the training effect of the model, perturbation is usually added to the data used for training. For example, two different images can be mixed in a preset way, and the identification results of the two images can also be mixed.

However, such a mixing method among images can lead to serious destruction of semantic information of a scene, thus the effect of the semantic segmentation model is impaired to a certain extent.

### SUMMARY

The present application provides a model training method, an identification method, device, storage medium and program product to solve the problem that, when training a model in the prior art, the way to the mixing of images would destroy the scene semantic information of the images.

According to a first aspect of the present application, a training method for semantic segmentation model is provided, including:
acquiring a first training image, a deformed image and a supervised loss function corresponding to a supervised identification result of a second training image, where the deformed image is an image obtained by deforming the first training image;
inputting the first training image to a first model to obtain a first unsupervised identification result and inputting the deformed image to a second model to obtain a second unsupervised identification result; where the first model has the same structure as the second model;
obtaining a scrambled identification result by deforming the first unsupervised identification result, and determining a consistency loss function according to the second unsupervised identification result and the scrambled identification result; and
updating a parameter in the second model according to the consistency loss function and the supervised loss function, and the updated second model is used for semantic segmentation of images.

According to a second aspect of the present application, an image identification method is provided, including:
acquiring an image to be identified, inputting the image to be identified into a preset semantic segmentation model, to obtain and output an identification result of the image to be identified; and
where the semantic segmentation model is a model obtained by training through the method described in the first aspect.

According to a third aspect of the present application, a training apparatus for a semantic segmentation model is provided, including:
an acquiring unit, configured to acquire a first training image, a deformed image and a supervised loss function corresponding to a supervised identification result of a second training image, where the deformed image is an image obtained by deforming the first training image;
an identifying unit, configured to input the first training image to a first model to obtain a first unsupervised identification result and input the deformed image to a second model to obtain a second unsupervised identification result; where the first model has the same structure as the second model;
a scrambling unit, configured to obtain a scrambled identification result by deforming the first unsupervised identification result;
a function constructing unit, configured to determine a consistency loss function according to the second unsupervised identification result and the scrambled identification result; and
an updating unit, configured to update a parameter in the second model according to the consistency loss function and the supervised loss function, and the updated second model is used for semantic segmentation of images.

According to a fourth aspect of the present application, an image identification apparatus is provided, including:
an acquiring unit, configured to acquire an image to be identified;
an identifying unit, configured to input the image to be identified into a preset semantic segmentation model, to obtain and output an identification result of the image to be identified; and
where the semantic segmentation model is a model obtained by training through the apparatus described in the third aspect.

According to a fifth aspect of the present application, an electronic device is provided, including:
at least one processor;
a memory, communicatively connected to the at least one processor; where
the memory stores instructions executable by the at least one processor, the instructions being executed by the at least one processor to enable the at least one processor to perform the method described in the first aspect or the second aspect.

According to a sixth aspect of the present application, a computer program product is provided, the computer program product including: a computer program, the computer program being stored in a readable storage medium, where at least one processor of an electronic device is capable of reading the computer program from the readable storage medium, and the at least one processor executes the computer program to enable the electronic device to perform the method described in the first aspect or the second aspect.

According to a seventh aspect of the present application, a computer program product is provided, including a computer program, when executed by a processor, the computer program implements the method described in the first aspect or the second aspect.

The present application provides a model training method, an identification method, device, storage medium and program product, including: acquiring a first training image, a deformed image and a supervised loss function corresponding to a supervised identification result of a second training image, where the deformed image is an image obtained by deforming the first training image itself; inputting the first training image to a first model to obtain a first unsupervised identification result and inputting the deformed image to a second model to obtain a second unsupervised identification result; where the first model has the same structure as the second model; obtaining a scrambled identification result by deforming the first unsupervised identification result, and determining a consistency loss function according to the second unsupervised identification result and the scrambled identification result; and updating a parameter in the second model according to the consistency loss function and the supervised loss function, and the updated second model is used for semantic segmentation of images. In the solution provided by the present application, the image is deformed by the means of deforming the first training image without label itself, and the first unsupervised identification result is obtained by using the first model to identify the image before deformation, and the second unsupervised identification result is obtained by using the second model to identify the image after deformation, and the first unsupervised identification result of the first model is deformed, thus a consistency loss function can be constructed according to the second unsupervised identification result and the scrambled identification result. In this way, it is able to enhance the constraint effect of the consistency loss function and avoid destroying the scene semantic information of the images used for training.

It should be understood that what is described in this section is not intended to identify key or important features of embodiments of the present application, nor is it intended to limit the scope of the present application. Other features of the present application will be readily understood by the following specification.

### BRIEF DESCRIPTION OF DRAWINGS

The accompanying drawings are used for a better understanding of the present solution and do not constitute a limitation of the present application, where:
Fig. 1 is an application scenario diagram shown by an exemplary embodiment of the present application;
Fig. 2 is a schematic diagram of image mixing shown by an exemplary embodiment of the present application;
Fig. 3 is a model structure diagram shown by an exemplary embodiment of the present application;
Fig. 4 is a schematic flowchart of a training method for a semantic segmentation model shown by an exemplary embodiment of the present application;
Fig. 5 is a training flowchart of a semantic segmentation model shown by an exemplary embodiment of the present application;
Fig. 6 is a schematic flowchart of a training method for a semantic segmentation model shown by an exemplary embodiment of the present application;
Fig. 7 is a schematic diagram of a deformation starting point and a deformation ending point shown by an exemplary embodiment of the present application;
Fig. 8 is a schematic diagram of the deformation of data to be deformed shown by an exemplary embodiment of the present application;
Fig. 9 is a schematic flowchart of an image identification method shown by an exemplary embodiment of the present application;
Fig. 10 is a schematic structural diagram of a training apparatus for a semantic segmentation model shown by an exemplary embodiment of the present application;
Fig. 11 is a schematic structural diagram of a training apparatus for a semantic segmentation model shown by another exemplary embodiment of the present application;
Fig. 12 is a schematic structural diagram of an image identification apparatus shown by an exemplary embodiment of the present application; and
Fig. 13 is a block diagram for implementing an electronic device shown by the embodiment of the present application.

### BRIEF DESCRIPTION OF DRAWINGS

Exemplary embodiments of the present application are described below with reference to the accompanying drawings, which include various details of the embodiments of the present application to facilitate understanding, and should be considered merely exemplary. Accordingly, those skilled in the art should realize that various changes and modifications can be made to the embodiments described herein without departing from the scope of the present application. Likewise, for clarity and conciseness, descriptions of well-known functions and structures are omitted in the following description.

Currently, there is a semi-supervised learning method in which a student network and a teacher network are set. The teacher network has the same structure as the student network, and a loss function is constructed during the training process, and the weights in the student network are updated through the constructed loss function, and the weights in the teacher network can also be updated according to the weight value in the student network.

Among them, sample data with label and sample data without label can be used for training the model.

There are two kinds of training loss functions in the training process. The first one is a supervised loss, which is used to constrain the process of training the model on the data with label. Specifically, the data with label is input into the student network to obtain an identification result, and then the loss function is constructed based on the identification result and a label of the data with label.

The other is a consistency loss, which constrains the consistency of the output results of the student network and the teacher network, and is used for constraining the process of training the model by the data without label. Specifically, the data without label can be input into the student network and the teacher network respectively, and the identification results can be obtained respectively, and then a consistency loss function can be constructed based on the identification results of the two networks.

To enhance the effect of the consistency loss function, some data perturbation methods are usually adopted, such as adding noise, etc. Specifically, two different images can be mixed in a certain way. The constraint condition is that the outputting of the mixed image through the student network has the same result as that of the outputting and the mixing of the two original images through the teacher network.

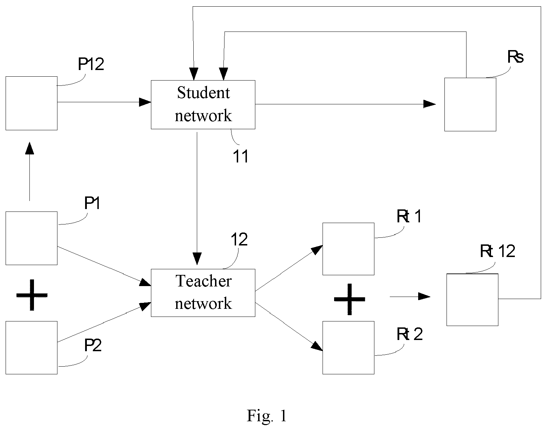

Fig. 1 is an application scenario diagram shown by an exemplary embodiment of the present application.

As shown in Fig. 1, a student network 11 and a teacher network 12 are set.

A first original image P1 and a second original image P2 can be mixed to generate a mixed image P12, and the mixed image P12 is transmitted to the student network 11 to obtain a student identification result Rs of the student network 11.

The first original image P1 and the second original image P2 can also be input into the teacher network 12 to obtain a first teacher identification result Rt1 for the first original image P1 and a second teacher identification result Rt2 for the second original image P2.

The first teacher identification result Rt1 and the second teacher identification result Rt2 are mixed to obtain a mixed result Rt12. The student identification result Rs and the mixed result Rt12 can be compared and the weight parameter in the student network 11 can be updated based on the comparison result, and the weight parameter in the teacher network 12 can be updated based on the weight parameter in the student network 11.

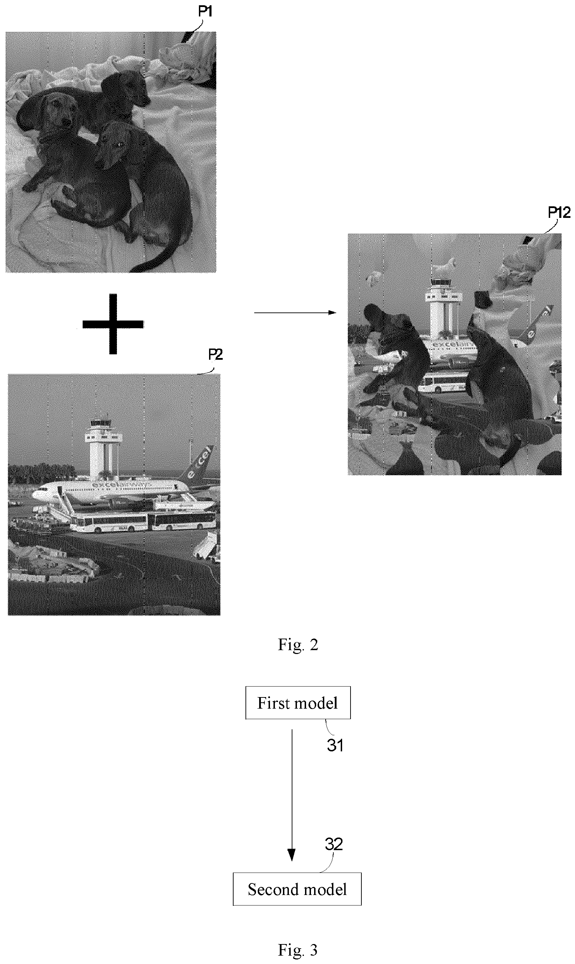

Fig. 2 is a schematic diagram of image mixing shown by an exemplary embodiment of the present application.

As shown in Fig. 2, for example, there are a first original image P1 and a second original image P2, and these two original images can be mixed to generate a mixed image P12.

However, this method of mixing between images will cause serious destruction of the scene semantic information. When the model is trained by using such mixed images, the training effect will be affected.

To solve the above technical problems, in the solution provided by the present application, the image is scrambled by the means of the deformation of the original image itself, so as to not only enhance the constraint effect of the consistency loss function, but also avoid destroying the scene semantic information of the image used for training.

The present application provides a model training method, an identification method, device, storage medium and program product, applied to artificial intelligence technology, specifically related to computer vision technology and deep learning technology, to solve the problem that, when training a model in the prior art, the way to the mixing of images would destroy the scene semantic information of the images.

Fig. 3 is a model structure diagram shown by an exemplary embodiment of the present application.

As shown in Fig. 3, in the method provided by the present application, a model to be trained can be built in advance, which specifically can include a first model 31, and can also include a second model 32. The structure of the first model 31 and the second model 32 can be the same, wherein the weight parameters can be different.

In one embodiment, the model to be trained can be built, and the model can be copied to obtain the first model 31 and the second model 32.

Among them, the first model 31 can be a student network, and the second model 32 can be a teacher network. Sample images can be used to train the first model 31 and the second model 32 to obtain a semantic segmentation model. For example, the trained first model 31 or the second model 32 can be used as a semantic segmentation model.

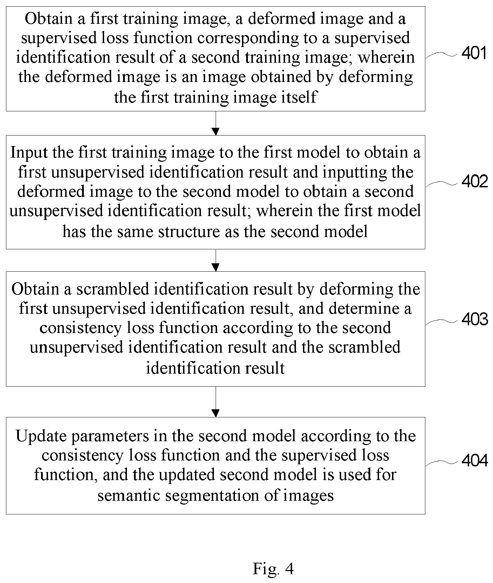

Fig. 4 is a schematic flowchart of a training method for a semantic segmentation model shown by an exemplary embodiment of the present application.

As shown in Fig. 4, the present application provides a training method for a semantic segmentation model, including:
step 401, acquiring a first training image, a deformed image and a supervised loss function corresponding to a supervised identification result of a second training image; where the deformed image is an image obtained by deforming the first training image itself.

Specifically, the training method of the semantic segmentation model provided by the present application can be performed by an electronic device with computing power, for example, it can be a computer.

Further, sample data for training the model can be set. The sample data can include a first training image, where the first training image is an image without label. The sample data can also include a second training image, where the second training image is an image with label.

In practical applications, the electronic device can use the second training image with label and the first training image without label to train the first model and the second model.

Among them, the electronic device can obtain the first training image, as well as the second training image and its label when training the model, and then train the model.

Specifically, the electronic device can input the obtained second training image into the first model to obtain the supervised identification result of the second training image. Then the supervised loss function is constructed based on the supervised identification result of the obtained second training image and the label of the second training image.

Further, a preset deformation method for deforming the image itself can be preset, and for each first training image, the electronic device can deform the first training image based on the preset deformation method to obtain a deformed image of the first training image. By the means of deforming the first training image itself, a deformed image that is scrambled and does not destroy the scene semantic information of the image can be obtained.

In practical applications, the electronic device can acquire the first training image and deform it, and also acquire the second training image and process the second training image by the first model to obtain the supervised loss function.

Step 402, inputting the first training image to the first model to obtain a first unsupervised identification result and inputting the deformed image to the second model to obtain a second unsupervised identification result; where the first model has the same structure as the second model.

During the training process, the electronic device can acquire the first training image, and input the acquired first training image into the first model to obtain the first unsupervised identification result.

In practical applications, the electronic device can acquire multiple first training images during each training process. For example, the number of training data n can be preset, then n first training images can be acquired during each training process, and the electronic device can use the first model to identify the first unsupervised identification result of each first training image.

The first model includes weight parameters, and the electronic device can process the first training image based on the weight parameter in the first model to obtain the first unsupervised identification result. For example, if the first model is a neural network structure, the electronic device can perform convolution processing on the first training image based on the weight parameter in the first model, to extract the feature information in the image, and then classify each pixel point in the image based on the feature information in the image to obtain the first unsupervised identification result.

In practical applications, for each first training image, the electronic device can determine the corresponding first unsupervised identification result.

Specifically, the electronic device can also input the deformed image into the second model, and use the second model to identify the deformed image to obtain the second unsupervised identification result.

For each first training image, a corresponding deformed image can be generated, and then the second model can be used to process the deformed image of each first training image to obtain the second unsupervised identification result.

The second model includes weight parameters, and the electronic device can process the deformed image based on the weight parameter in the second model to obtain the second unsupervised identification result. For example, if the second model is a neural network structure, the electronic device can perform convolution processing on the deformed image based on the weight parameter in the second model, to extract the feature information in the deformed image, and then classify each pixel point in the deformed image based on the feature information in the deformed image to obtain the second unsupervised identification result.

Among them, the first model and the second model have the same structure.

Step 403, obtaining a scrambled identification result by deforming the first unsupervised identification result, and determining a consistency loss function according to the second unsupervised identification result and the scrambled identification result.

To ensure that the output results of the first model and the second model are stable, it is necessary to ensure that the output results of the first model and the second model are consistent as much as possible. Therefore, the consistency loss function is set during the training process. The images can be input into the first model and the second model respectively to obtain two identification results, and then construct the consistency loss function according to the two identification results, to improve the consistency of the first model and the second model.

At the same time, in order to improve the constraint effect of the consistency loss function, the first training image itself used for training can also be deformed to obtain the deformed image, so as to constrain the consistency of the first model and the second model by means of deformation.

Among them, the second unsupervised identification result is the result obtained by identifying the deformed image through the second model. In order to compare the identification result of the first model and the identification result of the second model, the first unsupervised identification result of the first model can be deformed to obtain the deformation result, so that the deformation result is comparable to the identification result of the second model.

Specifically, a same preset deformation method can be used to deform the first training image and the first unsupervised identification result.

A method of generating the consistency loss function can be preset. The electronic device can determine the consistency loss function according to the second unsupervised identification result and the deformation identification result.

Step 404, updating a parameter in the second model according to the consistency loss function and the supervised loss function, and the updated second model is used for semantic segmentation of images.

Further, the electronic device can construct a total loss function according to the determined consistency loss function and the acquired supervised loss function, and then perform a gradient retransmission according to the total loss function, to update the parameter in the second model.

In practical applications, the parameter in the first model can be updated according to the consistency loss function and the supervised loss function, and then the parameter in the second model can be updated based on the updated parameter of the first model.

In practical applications, the consistency loss function and the supervised loss function can be added to obtain the total loss function.

Among them, specifically, the parameter of the first model can be updated according to the consistency loss function and the supervised loss function, and then the parameter of the second model can be updated according to the parameter of the first model. In the training process, the parameter in the second model can be obtained by performing moving average processing on the parameter in the first model each time.

Specifically, the parameter in the second model may also be updated according to the updated parameter in the first model and the current parameter in the second model.

Among them, through multiple training, the identification result of the first model and the identification result of the second model are getting more and more accurate. When the determined consistency loss function and supervised loss function meet the preset requirements, the updated second model can be used as a semantic segmentation model.

The semantic segmentation model is used to perform speech segmentation on the image to obtain the object to be identified in the image.

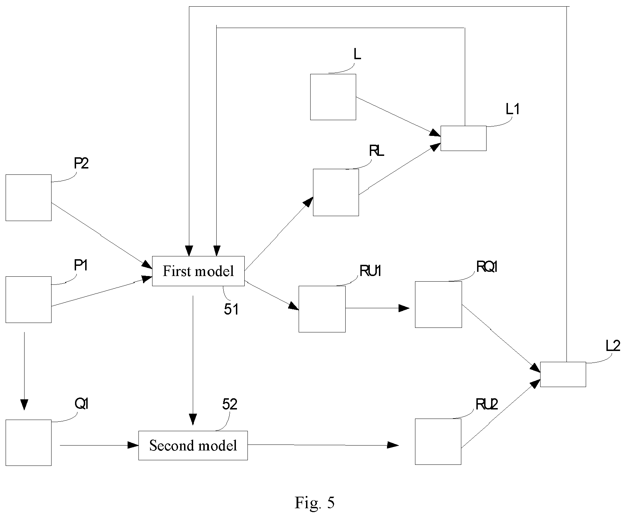

Fig. 5 is a training flowchart of a semantic segmentation model shown by an exemplary embodiment of the present application.

As shown in Fig. 5, a first model 51 and a second model 52 are set in the solution provided by the present application.

The electronic device can acquire a first training image P1 and a deformed image Q1 corresponding to each first training image P1. The electronic device can also acquire a supervised loss function L1 corresponding to the supervised identification result of the second training image.

In one implementation, the electronic device can acquire a second training image P2 and its corresponding label L, and input the second training image P2 into the first model to obtain a supervised identification result RL of P2. The electronic device can construct the supervised loss function L1 according to a label L of the second training image and the supervised identification result RL.

Specifically, the electronic device can also input the acquired first training image P1 into the first model 51 to obtain a first unsupervised identification result RU1. The electronic device also inputs the deformed image Q1 corresponding to the first training image P1 into the second model to obtain a second unsupervised identification result RU2.

Further, the electronic device can also deform the first unsupervised identification result RU1 to obtain a scrambled identification result RQ1, so that the electronic device can construct a consistency loss function L2 according to the scrambled identification result RQ1 and the second unsupervised identification result RU2.

In practical applications, the electronic device can update the parameter in the first model 51 according to the supervised loss function L1 and the consistency loss function L2. Then, the parameter of the second model 52 can be updated according to the updated parameter in the first model 51.

The present application provides a training method for a semantic segmentation model, including: acquiring a first training image, a deformed image and a supervised loss function corresponding to a supervised identification result of a second training image, where the deformed image is an image obtained by deforming the first training image itself; inputting the first training image to a first model to obtain a first unsupervised identification result and inputting the deformed image to a second model to obtain a second unsupervised identification result; where the first model has the same structure as the second model; obtaining a scrambled identification result by deforming the first unsupervised identification result, and determining a consistency loss function according to the second unsupervised identification result and the scrambled identification result; and updating parameter in the second model according to the consistency loss function and the supervised loss function, and the updated second model is used for semantic segmentation of images. In the training method of the semantic segmentation model provided by the present application, the image is deformed by the means of deforming the first training image without label itself, and the first unsupervised identification result is obtained by using the first model to identify the image before deformation, and the second unsupervised identification result is obtained by using the second model to identify the image after deformation, and the first unsupervised identification result of the first model is deformed, thus a consistency loss function can be constructed according to the second unsupervised identification result and the scrambled identification result. In this way, it is able to enhance the constraint effect of the consistency loss function and avoid destroying the scene semantic information of the images used for training.

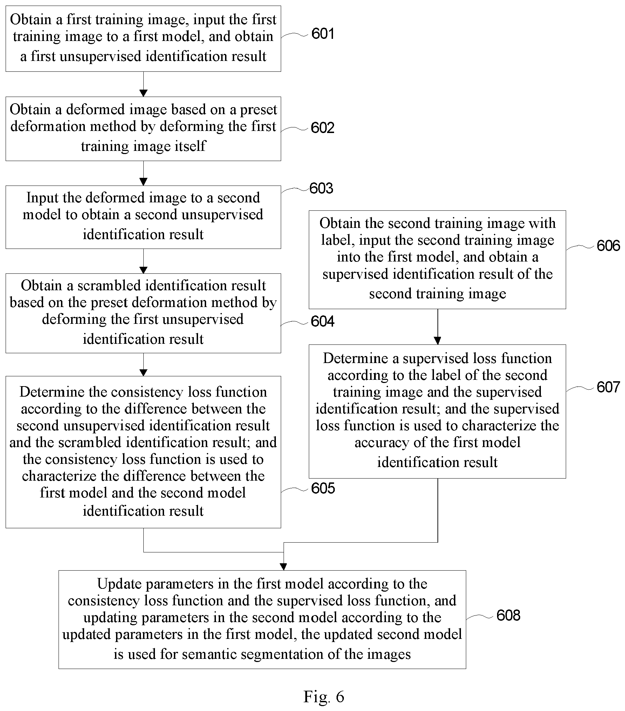

Fig. 6 is a schematic flowchart of a training method for a semantic segmentation model shown by an exemplary embodiment of the present application.

As shown in Fig. 6, the present application provides a training method for a semantic segmentation model, including:
step 601, acquiring a first training image, inputting the first training image to a first model, to obtain a first unsupervised identification result.

Step 601 is implemented in a similar manner to acquire the first training image in step 401 and in a similar manner to obtain the first unsupervised identification result in step 402 and will not be repeated herein.

Step 602, obtaining a deformed image based on a preset deformation method by deforming the first training image itself.

Among them, the deformation method can be preset so that the electronic device can deform the first training image itself based on the preset deformation method to obtain a deformation process corresponding to the first training image.

Specifically, in the solution provided by the present application, the first training image itself is deformed so as to achieve the purpose of scrambling the image, and such method will not destroy the scene semantic information in the first training image, and then the model can be trained with the scrambled image to obtain a model with accurate identification result.

Step 603, inputting the deformed image to a second model to obtain a second unsupervised identification result.

Step 603 is implemented in a similar manner to step 402 in which the second unsupervised identification result is obtained and will not be repeated herein.

Step 604, obtaining a scrambled identification result based on the preset deformation method by deforming the first unsupervised identification result.

Step 604 can be executed after step 601, and there is no restriction on the execution timing of steps 602 and 603.

Among them, the first training image can be processed with the first model through the preset deformation method, and the first unsupervised identification result obtained is deformed to obtain the scrambled identification result. The preset deformation method is the same as the deformation method of the first training image in step 602.

Specifically, the first training image is deformed in the present solution and the deformed image is identified by the second model. The first model is also used to identify the first training image, and then the identification result output by the first model is deformed through the same deformation method. In this way, the consistency of the first model and the second model can be constrained according to the second unsupervised identification result of the identification of the deformed images, and the scrambled identification result of the deformation of the first unsupervised identification result.

For example, there is the first training image P, which can be deformed to obtain a P'. A first unsupervised identification result R is obtained by identifying P through the first model, and then the R is deformed by a preset deformation method to obtain a scrambled identification result R'. A second unsupervised identification result R1 is obtained by identifying the P' through the second model. The R' is the result of deforming the identification result of the original image, and the R1 is the result of identifying the deformed image of the original image.

The deformation of the image itself or the identification result itself can be performed without destroying the scene semantic information in the image or the identification result. Therefore, the R', R1 can be used to constrain the consistency of the first model and the second model, making the two output results tend to be consistent.

Among them, the preset pre-determined deformation method can deform the data to be deformed, and the data to be deformed can include the above-mentioned first training image, and can also include the first unsupervised identification result obtained by the first model to identify the first training image.

Specifically, a plurality of pixel points is included in the data to be deformed. For example, if the data to be deformed is the first training image, then the data to be deformed includes a plurality of pixel points, each pixel point having a value corresponding to the R, G, and B three channels. If the data to be deformed is the first unsupervised identification result, the data to be deformed includes a plurality of pixel points, each pixel point having a classification result identified by the first model.

Further, a deformation starting point and each deformation ending point corresponding to each deformation starting point can be determined in the data to be deformed. The deformation starting point can be a point among a plurality of pixel points in the data to be deformed, and the deformation ending point can be a point among a plurality of pixel points in the data to be deformed. For example, n deformation starting points can be determined in the data to be deformed, and for each deformation starting point, the corresponding each deformation ending point can also be determined.

In practical applications, the deformation process can be performed on the data to be deformed according to each deformation starting point and each deformation ending point. A function can be determined, by which the data to be deformed is processed so that each deformation starting point in the data to be deformed coincides with the corresponding each deformation ending point.

Among them, for example, the data to be deformed can be deformed by the thin-plate splines (TPS) method. The TPS is one of the interpolation methods and is a two-dimensional interpolation method. This method is capable of deforming the data to be deformed in a specific way so that the deformation starting point in the data to be deformed can coincide with the corresponding deformation ending point.

Specifically, by deforming the first training image and the first unsupervised identification result in this way, it is able to perform perturbation enhancement of the data without destroying the semantic information, and thus the training effect of the model is improved.

Further, a deformation starting point can be determined in the data to be deformed, for example, a plurality of deformation starting points can be determined in the data to be deformed. For each deformation starting point, each random parameter corresponding to it can be acquired. Among them, the random parameters for different deformation starting points can be the same or different.

In practical applications, the each deformation ending point of each deformation starting point can be determined according to the random parameter of each deformation starting point. For example, for a deformation starting point S1, a corresponding random parameter n1 can be obtained, and then a deformation ending point E1 corresponding to S1 can be determined according to n1.

Among them, the random number can be determined according to a Gaussian distribution.

In the present embodiment, the data to be deformed can be deformed according to the deformation starting point and deformation ending point, and thus perturbations are added to the data to be deformed by the means of deforming the data to be deformed itself. In this way, perturbations can be added to the data to be deformed while avoiding destroying the scene semantic information in the data to be deformed.

Specifically, in the solution of the present application, the first training image and the first unsupervised identification result of this first training image are deformed through the same deformation method. In the specific processing, each deformation starting point in the first training image has a position corresponding relationship with each deformation starting point in the first unsupervised identification result of the first training image.

Further, the random parameters of the deformation starting point with position corresponding relationship are the same. For the deformation starting point with corresponding relationship in the first training image and the first unsupervised identification result, they can be processed through the same random parameters, so that the deformation ending point with position corresponding relationship in the first training image and the first unsupervised identification result can be obtained.

In practical applications, since the first training image and the first unsupervised identification result have a deformation starting point with a position corresponding relationship and a deformation ending point with a position corresponding relationship. Thus, when the first training image and the first unsupervised identification result are deformed according to these starting points and ending points, the deformed image with consistency constraints and the scrambled identification result can be obtained, so that the deformed image and the scrambled identification result of the deformed image can be used to constrain the first model and the second model.

Specifically, the random number of each deformation starting point can include a longitudinal random value and a horizontal random value. According to the longitudinal random value, the horizontal random value corresponding to the each deformation starting point, and the position of the each deformation starting point, the each deformation ending point corresponding to the each deformation starting point is determined.

Further, the horizontal random value and the longitudinal random value of each deformation starting point can be values that conform to a Gaussian random distribution. For each deformation starting point, the position of each deformation starting point can be offset through the horizontal random value and the longitudinal random value, and then the position of the each deformation ending point corresponding to each deformation starting point can be obtained.

In this way of determining the deformation ending point of the deformation starting point by random values, the random number conforms to a Gaussian normal distribution, making the offset distance between each deformation ending point and the deformation starting point similar, and thus enabling the deformation of the data to be deformed while avoiding destroying the scene semantic of the data to be deformed.

In another implementation, when the data to be deformed is the first unsupervised identification result, and when determining the deformation starting point in the data to be deformed and each deformation ending point corresponding to each deformation starting point, acquiring a starting position of the each deformation starting point in the first training image corresponding to the first unsupervised identification result and an ending position of the each deformation ending point corresponding to the each deformation starting point. Then, determining each deformation starting point and each deformation ending point corresponding to each deformation starting point in the first unsupervised identification result according to the starting position of each deformation starting point in the first training image and the ending position of the each deformation ending point corresponding to each deformation starting point.

Specifically, when determining the deformation starting point and the deformation ending point in the first unsupervised identification result, the deformation starting point and the deformation ending point can be determined in the first unsupervised identification result directly according to the position of the deformation starting point and the position of the deformation ending point in the first training image corresponding to the first unsupervised identification result. For example, there are a deformation starting point S1 in the first training image with a position of psl, and a deformation ending point E1 corresponding to S1 with a position of pe1. Then, a pixel point with a position of psl can be determined as a deformation starting point S1' and a pixel point with a position of pe1 can be determined as a deformation ending point E1' in the first unsupervised identification result.

In the present implementation, the deformation starting point and deformation ending point can be determined directly in the first unsupervised identification result according to the information of the deformation starting point and deformation ending point in the first training image. It can avoid recalculating the deformation starting point and the deformation ending point in the first unsupervised identification result, thereby improving the speed of determining the deformation starting point and ending point.

Further, the data to be deformed has a plurality of sub-regions. When determining the deformation starting point in the data to be deformed, a deformation starting point corresponding to each sub-region can be determined in each sub-region.

In practical applications, when the data to be deformed is the first training image, the data to be deformed can be divided to obtain multiple sub-regions. For example, the first training image is divided into a 3^{∗}3 nine-box grid to obtain nine sub-regions. The deformation starting point corresponding to each sub-region can be determined in each sub-region.

In this way, uniformly distributed deformation starting points in the first training image can be obtained, which in turn enables the deformation of each region of the first training image.

Among them, the center of the sub-region can be used as the deformation starting point of the sub-region. For example, if 9 sub-regions are included in the first training image, then the center of each sub-region can be used as the deformation starting point of each sub-region. In the present implementation, the obtained deformation starting points are uniformly distributed in the data to be deformed.

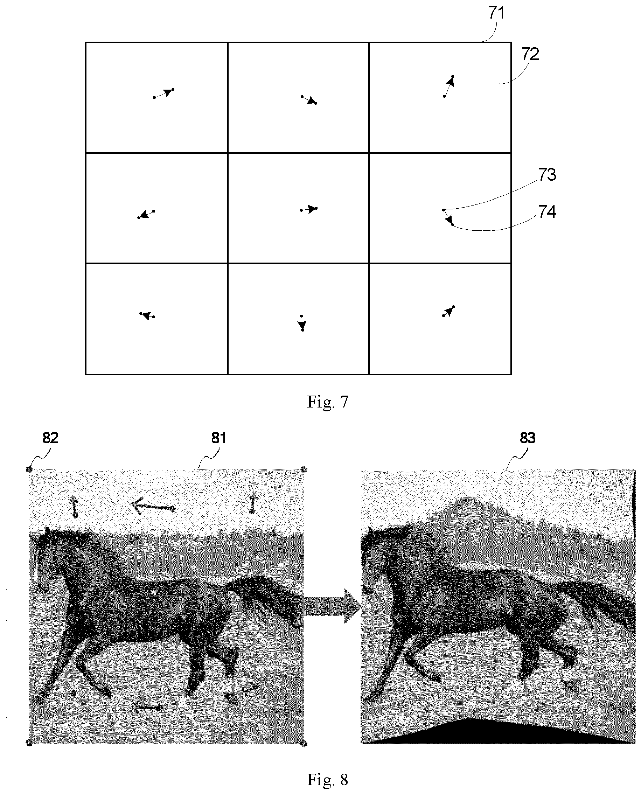

Fig. 7 is a schematic diagram of a deformation starting point and a deformation ending point shown by an exemplary embodiment of the present application.

As shown in Fig. 7, the data to be deformed 71 can be divided into a plurality of sub-regions 72, such as dividing to obtain nine sub-regions 72.

Among them, a center 73 of each sub-region 72 can be used as the deformation starting point, and thus nine deformation starting points 73 can be obtained. For each deformation starting point, the position of the deformation starting point can also be offset through a random number, to obtain each deformation ending point 74 for each deformation starting point.

Specifically, when deforming the data to be deformed according to the deformation starting point and deformation ending point, the data to be deformed can be distorted so that the position of each deformation starting point in the data to be deformed is moved to the position of the each deformation ending point corresponding to each deformation starting point.

For example, a deformation starting point S1 and a deformation ending point E1 corresponding to S1 is set in the data to be deformed. A deformation starting point S2, and a deformation ending point E2 corresponding to S2 are also set. The data to be deformed can be distorted and deformed so that the position of S1 is moved to the position of E1 and the position of S2 is moved to the position of E2.

Specifically, the transformation process can be applied to the data to be deformed based on the TPS algorithm, in this way, the data to be deformed itself can be deformed and thus the data to be deformed is scrambled without destroying the scene semantic information.

Further, when deforming the data to be deformed, the data to be deformed can be distorted according to the position of the corner point of the data to be deformed, and the position of the corner point of the data to be deformed after the distorting remains unchanged.

In practical applications, when deforming the data to be deformed, the four corner points of the data to be deformed can be used to constrain the deformation effect. Therefore, it is avoided that the data to be deformed is distorted and deformed too much, causing the scene semantic information of the data to be deformed to be destroyed.

Fig. 8 is a schematic diagram of the deformation of data to be deformed shown by an exemplary embodiment of the present application.

As shown in Fig. 8, the data to be deformed 81 can be deformed. In the deforming process, the four corner points 82 of the data to be deformed are used to constrain the data to be deformed 81, so that the corner positions of the deformed data 83 remain unchanged.

Step 605, determining the consistency loss function according to the difference between the second unsupervised identification result and the scrambled identification result; and the consistency loss function is used to characterize the difference between the first model and the second model identification result.

Among them, the consistency loss function can be constructed according to the scrambled identification results of each first training image and the second unsupervised identification result. Specifically, the consistency loss function can be determined according to the difference between the scrambled identification result of the first training image and the second unsupervised identification result.

Specifically, the consistency loss function is used to characterize the difference between the identification result of the first model and the identification result of the second model. The consistency loss function can be an L1 loss function, and the identification result of the first model and the identification result of the second model can be constrained by the L1 loss function. Further, when the model parameter is then updated according to the consistency loss function, the difference between the identification result of the first model and the identification result of the second model is getting smaller and smaller.

Step 606, obtaining the second training image with label, inputting the second training image into the first model, and obtaining a supervised identification result of the second training image.

Among them, when training the model based on a semi-supervised training method, the model can also be trained through the second training image with label. Specifically, the second training image with label can be input to the first model and the supervised identification result of the second training image can be determined based on the first model.

Specifically, the first model has parameter in which the second training image can be processed according to the parameter of the first model to extract feature information in the second training image, and the supervised identification result of the second training image is determined according to the feature information.

In the present implementation, the parameter in the first model can be updated through supervised data to improve the accuracy of the first model identification.

Step 607, determining a supervised loss function according to the label of the second training image and the supervised identification result; and the supervised loss function is used to characterize the accuracy of the first model identification result.

Further, the supervised loss function can be constructed according to a label of the second training image and the supervised identification result. For example, a cross-entropy loss function can be constructed.

In practical applications, the supervised loss function can characterize the accuracy of the identification result of the first model, specifically the difference between the identification result of the first model and a label of the second training image, and thus the parameter in the first model are updated based on the difference, so that the difference between the identification result of the first model and the identification result of the second model is getting smaller and smaller.

There is no restriction on the execution timing of steps 606-607 and steps 601-605.

Step 608, updating a parameter in the first model according to the consistency loss function and the supervised loss function, and updating a parameter in the second model according to the updated parameter in the first model, the updated second model is used for semantic segmentation of the images.

Among them, a batch of training data can be obtained during each training process, and the batch of training data includes multiple first training images and second training images. The consistency loss function and supervised loss function can be constructed based on the identification of the first training image and the second training image of a batch.

Specifically, the parameter in the first model can be updated according to the consistency loss function and the supervised loss function. For example, the constructed consistency loss function and the supervised loss function can be added to obtain a total loss function.

Further, the parameter in the first model can be updated according to the total loss function by performing a gradient back propagation. Thereafter, the parameter in the second model can be also updated according to the updated parameter in the first model.

For example, the parameter in the second model can be updated according to the updated parameter in the first model and the current parameter in the second model. The updated parameter in the second model can be the moving average of the parameter of the first model during the updating iteration of the first model. In this way, the parameter in the second model is updated, which can make the training result smoother and more stable.

The first model is updated according to the consistency loss function and the supervised loss function. Therefore, due to the constraints of the consistency loss function, it can enable the identification result of the first model and the identification result of the second model to be close to the same. In addition, since the supervised loss function constrains the first model, the output result of the first model can also be enabled to get more and more accurate. Therefore, the model training solution provided by the present application can obtain a model with identification accuracy.

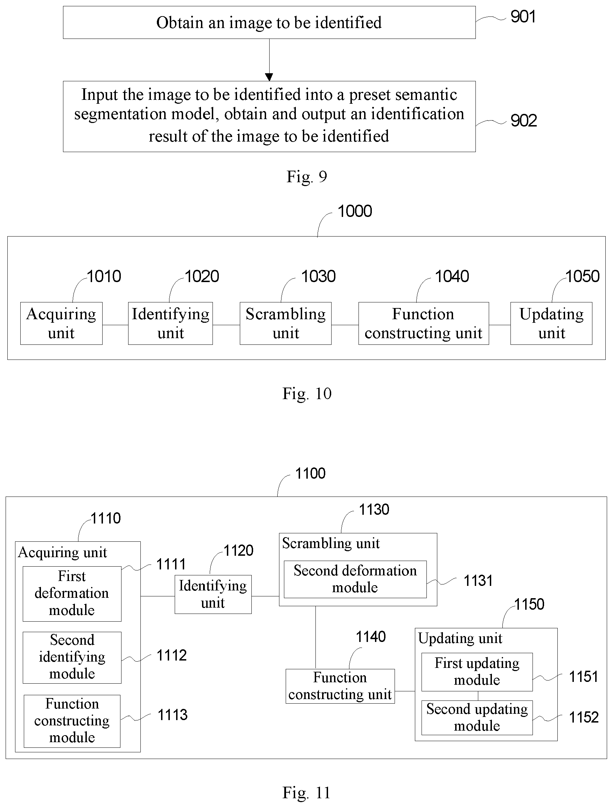

Fig. 9 is a schematic flowchart of an image identification method shown by an exemplary embodiment of the present application.

As shown in Fig. 9, the present application provides an image identification method, including:
step 901, acquiring an image to be identified;
step 902, inputting the image to be identified into a preset semantic segmentation model, to obtain and output an identification result of the image to be identified.

The semantic segmentation model applied in the method provided by the present application is the model obtained by training in any of the above mentioned embodiments.

Among them, a semantic segmentation model obtained from the training can be deployed into an identification device, and an image to be identified can be input to the identification device, which in turn enables the identification device to identify the image to be identified through the deployed semantic segmentation model.

Fig. 10 is a schematic structural diagram of a training apparatus for a semantic segmentation model shown by an exemplary embodiment of the present application.

As shown in Fig. 10, the present application provides a training apparatus 1000 for a semantic segmentation model, including:
an acquiring unit 1010, configured to acquire a first training image, a deformed image and a supervised loss function corresponding to a supervised identification result of a second training image, where the deformed image is an image obtained by deforming the first training image;
an identifying unit 1020, configured to input the first training image to a first model to obtain a first unsupervised identification result and input the deformed image to a second model to obtain a second unsupervised identification result; where the first model has the same structure as the second model;
a scrambling unit 1030, configured to deform the first unsupervised identification result to obtain a scrambled identification result;
a function constructing unit 1040, configured to determine a consistency loss function according to the second unsupervised identification result and the scrambled identification result; and
an updating unit 1050, configured to update parameter in the second model according to the consistency loss function and the supervised loss function, and the updated second model is used for semantic segmentation of images.

The training apparatus for the semantic segmentation model provided by the present application is similar to the embodiment shown in Fig. 4 and will not be repeated herein.

Fig. 11 is a schematic structural diagram of a training apparatus for a semantic segmentation model shown by another exemplary embodiment of the present application.

As shown in Fig. 11, in a training apparatus 1100 of the semantic segmentation model provided by the present application, an acquiring unit 1110 has the same function as the acquiring unit 1010, an identifying unit 1120 has the same function as the identifying unit 1020, a scrambling unit 1130 has the same function as the scrambling unit 1030, a function constructing unit 1140 has the same function as the function constructing unit 1040, and an updating unit 1150 has the same function as the updating unit 1050.

Among them, the acquiring unit 1110 includes a first deformation module 1111, configured to obtain the deformed image by deforming the first training image itself based on a preset deformation method.

The scrambling unit 1130 includes a second deformation module 1131, configured to obtain the scrambled identification result by deforming the first unsupervised identification result based on the preset deformation method.

Among them, the data to be deformed includes a plurality of pixel points, the data to be deformed is the first training image or the first unsupervised identification result; the first deformation module 1111 and/or the second deformation module 1131 are specifically configured to:
determine a deformation starting point in the data to be deformed and each deformation ending point corresponding to each deformation starting point; and
perform deformation processing on the data to be deformed according to the each deformation starting point and the each deformation ending point.

Among them, the first deformation module 1111 and/or the second deformation module 1131 are specifically configured to:
determine a deformation starting point in the data to be deformed, and obtain each random parameter corresponding to each deformation starting point; and
determine each deformation ending point corresponding to each deformation starting point according to each deformation starting point and their corresponding random parameters.

Among them, each deformation starting point in the first training image has a position corresponding relationship with each deformation starting point in the first unsupervised identification result; the random parameters of the deformation starting point with position corresponding relationship are the same.

Among them, the random parameters comprise a longitudinal random value and a horizontal random value;
the first deformation module 1111 and/or the second deformation module 1131 are specifically configured to:
determine each deformation ending point corresponding to each deformation starting point according to the longitudinal random value, the horizontal random value corresponding to the each deformation starting point, and the position of the each deformation starting point.

Among them, when the data to be deformed is the first unsupervised identification result, the second deformation module 1131 is specifically configured to:
acquire a starting position of the each deformation starting point in the first training image corresponding to the first unsupervised identification result and an ending position of each deformation ending point corresponding to each deformation starting point; and
determine each deformation starting point and each deformation ending point corresponding to each deformation starting point in the first unsupervised identification result according to the starting position of each deformation starting point in the first training image, and the ending position of the each deformation ending point corresponding to each deformation starting point.

Among them, the data to be deformed has a plurality of sub-regions; the first deformation module 1111 and/or the second deformation module 1131 are specifically configured to:
determine the deformation starting point corresponding to each sub-region in each sub-region.

Among them, the first deformation module 1111 and/or the second deformation module 1131 are specifically configured to:
determine a center point of each sub-region as a deformation starting point of each sub-region.

Among them, the first deformation module 1111 and/or the second deformation module 1131 are specifically configured to:
distort the data to be deformed so that the position of each deformation starting point in the data to be deformed is moved to the position of the each deformation ending point corresponding to each deformation starting point.

The first deformation module 1111 and/or the second deformation module 1131 are specifically configured to:
distort the data to be deformed according to the position of the corner point of the data to be deformed, and the position of the corner point of the data to be deformed after distorting remains unchanged.

Among them, the function constructing unit 1140 is specifically configured to:
determine the consistency loss function according to the difference between the second unsupervised identification result and the scrambled identification result; and the consistency loss function is used to characterize the difference between the identification result of the first model and the identification result of the second model.

Among them, the acquiring unit 1110, including:
a second identifying module 1112, configured to acquire the second training image with label, inputting the second training image into the first model, to obtain a supervised identification result of the second training image; and
a function constructing module 1113, configured to determine the supervised loss function according to the label of the second training image and the supervised identification result; and the supervised loss function is used to characterize the accuracy of the first model identification result.

Among them, the updating unit 1150 includes:
a first updating module 1151, configured to update a parameter in the first model according to the consistency loss function and the supervised loss function; and
a second updating module 1152, configured to update a parameter in the second model according to the updated parameter in the first model.

Among them, the second updating module 1152 is specifically configured to:
update the current parameter in the second model according to the updated parameter in the first model and the current parameter in the second model.

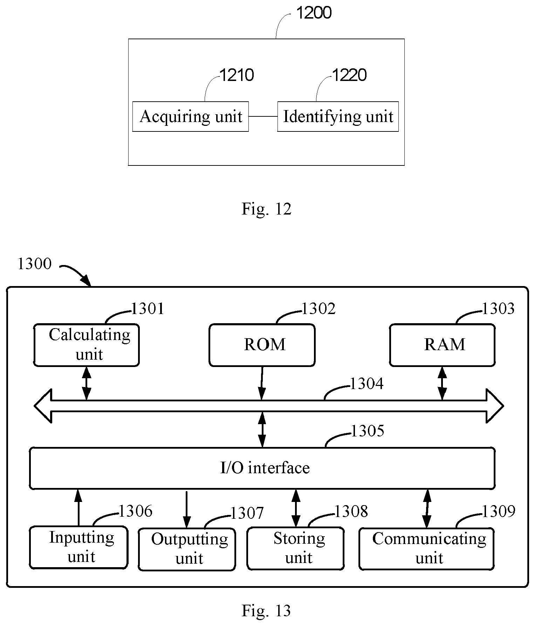

Fig. 12 is a schematic structural diagram of an image identification apparatus shown by an exemplary embodiment of the present application.

As shown in Fig. 12, the image identification apparatus 1200 provided by the present application includes:
an acquiring unit 1210, configured to acquire an image to be identified;
an identifying unit 1220, configured to input the image to be identified into a preset semantic segmentation model, to obtain and output an identification result of the image to be identified; and
where the semantic segmentation model is a model obtained by training through any of the above apparatus.

According to embodiments of the present application, the present application also provides an electronic device and a readable storage medium.

According to embodiments of the present application, the present application also provides a computer program product, the computer program product including: a computer program, the computer program being stored in a readable storage medium, at least one processor of the electronic device being capable of reading the computer program from the readable storage medium, the at least one processor executing the computer program to enable the electronic device to perform the solutions provided by any of the above embodiments.

Fig. 13 is a block diagram for implementing an exemplary electronic device 1300 shown by the embodiment of the present application. The electronic device is intended to represent various forms of digital computer, such as a laptop, a desktop computer, a work platform, a personal digital assistant, a server, blade server, a mainframe computer, and other suitable computers. Electronic devices may also represent various forms of mobile apparatus, such as a personal digital assistant, a cellular phone, a smartphone, a wearable device, and other similar computing apparatuses. The components shown herein, their connections and relationships, and their functions are intended as examples only, and are not intended to limit the implementations of the present disclosure described and/or claimed herein.

As shown in Fig. 13, the electronic device 1300 includes a computing unit 1301 which can perform various appropriate actions and processes according to a computer program stored in a read-only memory (ROM) 1302 or loaded into a random access memory (RAM) 1303 from a storing unit 13013. In the RAM 1303, various programs and data required for the operation of the device 1300 can also be stored. The computing unit 1301, the ROM 1302, and the RAM 1303 are connected to each other via a bus 1304. An input/output (I/O) interface 1305 is also connected to the bus 1304.

A plurality of components in the device 1300 are connected to the I/O interface 1305, including: an inputting unit 1306, for example a keyboard, mouse, etc.; an outputting unit 1307, for example various types of displays, speakers, etc.; a storing unit 13013, for example a disk, flash disk, etc.; and a communicating unit 1309, for example a network card, modem, wireless communication transceiver, etc. The communicating unit 1309 allows the device 1300 to exchange information/data with other devices through a computer network such as the Internet and/or various telecommunication networks.

The computing unit 1301 can be various general-purpose and/or special-purpose processing components with processing and computing capabilities. Some examples of the computing unit 1301 include, but not limited to, central processing unit (CPU), graphics processing unit (GPU), various dedicated artificial intelligence (AI) computing chips, various computing units that run machine learning model algorithms, digital signal processing (DSP), and any of appropriate processor, controller, microcontroller, etc. The calculating unit 1301 executes the various methods and processes described above, for example the training method of the semantic segmentation model or the image identification method. For example, in some embodiments, the training method of the semantic segmentation model or the image identification method may be implemented as a computer software program, which is tangibly contained in a machine-readable medium, for example the storing unit 13013. In some embodiments, part or all of the computer program can be loaded and/or installed on the device 1300 via the ROM 1302 and/or the communicating unit 1309. When the computer program is loaded into the RAM 1303 and executed by the calculating unit 1301, one or more steps of the training method of the semantic segmentation model or the image identification method described above can be executed. Alternatively, in other embodiments, the calculating unit 1301 can be configured to perform a training method of a semantic segmentation model or an image identification method through any other suitable means (for example, by means of firmware).

Various implementations of the systems and techniques described above herein can be implemented in a digital electronic circuit system, an integrated circuit system, a field-programmable gate array (FPGA), an application-specific integrated circuit (ASIC), an application-specific standard product (ASSP), a systems-on-a-chip (SOC), a load-programmable logic device (CPLD), a computer hardware, a firmware, a software, and/or combinations thereof. These various implementations can include: implementing in one or more computer programs, which can be executed and/or interpreted on a programmable system including at least one programmable processor, which can be a dedicated or general-purpose programmable processor that may receive data and instructions from a storage system, at least one input apparatus, and at least one output apparatus, and transfer data and instructions to the storage system, the at least one input apparatus, and the at least one output apparatus.

The program codes for implementing the methods of the present disclosure can be written through any combination of one or more programming languages. These program codes can be provided to a processor or controller of a general purpose computer, a dedicated computer, or other programmable data processing apparatus, so that when executed by the processor or controller, the program code makes the functions/operations specified in the flowchart and/or block diagram to be implemented. The program codes can be fully executed on the machine, partially executed on the machine, partially executed on the machine as a stand-alone software package and partially executed on a remote machine or fully executed on a remote machine or server.

In the context of the present disclosure, a machine-readable medium can be a tangible medium that can contain or store a program for use by the instruction execution system, apparatus, or device or in combination with the instruction execution system, apparatus, or device. The machine-readable medium may be a machine-readable signal medium or a machine-readable storage medium. The machine-readable medium can include, but is not limited to, electronic, magnetic, optical, electromagnetic, infrared, or semiconductor system, apparatus, or device, or any suitable combination of the above contents. More specific examples of the machine-readable storage medium can include one or more wire-based electrical connections, a portable computer disk, a hard disk, a random access memory (RAM), a read-only memory (ROM), an erasable programmable read-only memory (EPROM or flash memory), an optical fiber, a convenient compact disk read-only memory (CD-ROM), an optical storage device, a magnetic storage device, or any suitable combination of the above contents.

To provide interaction with users, the system and technique described herein can be implemented on a computer including: a display apparatus (for example, a CRT (cathode ray tube) or LCD (liquid crystal display) monitor) for displaying information to the users; and a keyboard and pointing apparatus (for example, a mouse or trackball) through which the users can provide input to the computer. Other types of apparatus can also be used to provide interaction with the users; for example, the feedback provided to the users can be any form of sensory feedback (for example, visual feedback, auditory feedback, or haptic feedback); and the input from the users can be received in any form (including acoustic input, voice input, or haptic input).

The systems and techniques described herein can be implemented in a computing system that includes a back-end component (for example, as a data server), or a computing system that includes a middleware component (for example, an application server), or a computing system that includes a front-end component (for example, a user computer having a graphical user interface or a web browser through which a user can interact with the implementation of the system and technique described herein), or a computing system including any combination of such back-end components, middleware components, or front-end components. The components of the system can be interconnected through any form or medium of digital data communication (for example, a communication network). Examples of communication networks include local area networks (LAN), wide area networks (WAN), and the Internet.

A computer system can include a client and a server. The client and server are generally remote from each other and typically interact through a communication network. The client-server relationship is generated by computer programs that run on corresponding computers and have a client-server relationship with each other. The server can be a cloud server, also known as a cloud computing server or cloud host, which is a hosting product in the cloud computing service system to solve the defects of difficult management and weak business scalability in the traditional physical host with VPS service ("Virtual Private Server", or simply "VPS"). The server can also be a distributed system server, or a server that incorporates a block chain.

It should be understood that the various forms of processes shown above can be used to reorder, add or delete steps. For example, each step described in the present application can be executed in parallel, sequentially, or in a different order, as long as the desired result of the technical solution disclosed in the present application can be achieved, this is not limited herein.

The specific implementations described above do not constitute a limitation on the scope of protection of the present application. It should be understood by those skilled in the art that various modifications, combinations, sub-combinations and substitutions can be made depending on the design requirements and other factors. Any modifications, equivalent substitutions and improvements, etc. made within the principles of the present application shall be included in the scope of protection of the present application.

## Claims

1. A training method for semantic segmentation model, comprising:
acquiring (401) a first training image, a deformed image and a supervised loss function corresponding to a supervised identification result of a second training image, wherein the deformed image is an image obtained by deforming the first training image;
inputting (402) the first training image to a first model to obtain a first unsupervised identification result and inputting the deformed image to a second model to obtain a second unsupervised identification result; wherein the first model has the same structure as the second model;
obtaining (403) a scrambled identification result by deforming the first unsupervised identification result, and determining a consistency loss function according to the second unsupervised identification result and the scrambled identification result; and
updating (404) a parameter in the second model according to the consistency loss function and the supervised loss function, and the updated second model is used for semantic segmentation of images.

2. The method according to claim 1, wherein the acquiring (401) a deformed image comprises: obtaining the deformed image by deforming the first training image itself based on a preset deformation method;
the obtaining (403) a scrambled identification result by deforming the first unsupervised identification result comprises:
obtaining (403) the scrambled identification result by deforming the first unsupervised identification result based on the preset deformation method.

3. The method according to claim 2, wherein data to be deformed comprises a plurality of pixel points, and the data to be deformed is the first training image or the first unsupervised identification result; the preset deformation method comprises:
determining a deformation starting point in the data to be deformed and each deformation ending point corresponding to each deformation starting point; and
performing deformation processing on the data to be deformed according to the each deformation starting point and the each deformation ending point.

4. The method according to claim 3, wherein the determining a deformation starting point in the data to be deformed and each deformation ending point corresponding to each deformation starting point comprises:
determining a deformation starting point in the data to be deformed, and acquiring each random parameter corresponding to the each deformation starting point; and
determining each deformation ending point corresponding to the each deformation starting point according to the each deformation starting point and their corresponding random parameters.

5. The method according to claim 4, wherein
each deformation starting point in the first training image has a position corresponding relationship with each deformation starting point in the first unsupervised identification result; and random parameters of the deformation starting point with position corresponding relationship are the same;
wherein the random parameters comprise a longitudinal random value and a horizontal random value;
the determining each deformation ending point corresponding to the each deformation starting point according to the each deformation starting point and their corresponding random parameter comprises:
determining the each deformation ending point corresponding to the each deformation starting point according to the longitudinal random value, the horizontal random value corresponding to the each deformation starting point, and a position of the each deformation starting point.

6. The method according to claim 3, wherein
when the data to be deformed is the first unsupervised identification result, the determining a deformation starting point in the data to be deformed and each deformation ending point corresponding to each deformation starting point comprises:
acquiring a starting position of the each deformation starting point in the first training image corresponding to the first unsupervised identification result and an ending position of the each deformation ending point corresponding to the each deformation starting point; and
determining the each deformation starting point and the each deformation ending point corresponding to the each deformation starting point in the first unsupervised identification result according to the starting position of the each deformation starting point in the first training image and the ending position of the each deformation ending point corresponding to the each deformation starting point.

7. The method according to claim 3, wherein the data to be deformed has a plurality of sub-regions; the determining a deformation starting point in the data to be deformed comprises:
determining the deformation starting point corresponding to each sub-region in the each sub-region;
wherein the determining the deformation starting point corresponding to each sub-region in the each sub-region comprises:
determining a center point of the each sub-region as a deformation starting point of the each sub-region.

8. The method according to claim 3, wherein the performing deformation processing on the data to be deformed according to the each deformation starting point and the each deformation ending point comprises:
distorting the data to be deformed so that a position of the each deformation starting point in the data to be deformed is moved to a position of the each deformation ending point corresponding to the each deformation starting point;
the method further comprises:
distorting the data to be deformed according to a position of a corner point of the data to be deformed, and the position of the corner point of the data to be deformed after distorting remains unchanged.

9. The method according to any one of claims 1-8, wherein the determining a consistency loss function according to the second unsupervised identification result and the scrambled identification result comprises:
determining the consistency loss function according to a difference between the second unsupervised identification result and the scrambled identification result; and the consistency loss function is used to characterize a difference between the first model and the second model identification result.

10. The method according to any one of claims 1-8, wherein the acquiring a supervised loss function corresponding to a supervised identification result of a second training image comprises:
acquiring a second training image with label, and inputting the second training image into the first model, to obtain a supervised identification result of the second training image;
determining the supervised loss function according to a label of the second training image and the supervised identification result; and the supervised loss function is used to characterize an accuracy of the first model identification result.

11. The method according to any one of claims 1-8, wherein the updating a parameter in the second model according to the consistency loss function and the supervised loss function comprises:
updating a parameter in the first model according to the consistency loss function and the supervised loss function, and updating parameter in the second model according to the updated parameter in the first model.;
wherein the updating a parameter in the second model according to the updated parameter in the first model comprises:
updating a current parameter in the second model according to the updated parameter in the first model and the current parameter in the second model.

12. An image identification method, comprising:
acquiring (901) an image to be identified, and inputting (902) the image to be identified into a preset semantic segmentation model, to obtain and output an identification result of the image to be identified; and
wherein the semantic segmentation model is a model obtained by training through the method according to any one of claims 1-11.

13. An electronic device, comprising:
at least one processor (1301); and
a memory (1302), communicatively connected to the at least one processor (1301); wherein
the memory (1302) stores instructions executable by the at least one processor (1301), and the instructions are executed by the at least one processor (1301) to enable the at least one processor (1301) to perform the method according to any one of claims 1-11 or 12.

14. Anon-instantaneous computer-readable storage medium storing computer instructions, wherein the computer instructions are used to enable the computer to perform the method according to any one of claims 1-11 or 12.

15. A computer program product, comprising a computer program, when executed by a processor, the computer program implements the method according to any one of claims 1-11 or 12.
